# EUROPÄISCHE PATENTSCHRIFT

(11) **EP 3 186 612 B1**
(45) Veröffentlichungstag und Bekanntmachung des Hinweises auf die Patenterteilung: **12.06.2019**
(21) Anmeldenummer: 15766743.7
(22) Anmeldetag: 19.08.2015
(51) Int. Cl.: G01M 17/007, G01L 5/28

(54) **FAHRZEUGPRÜFSTAND SOWIE VERFAHREN ZUR DURCHFÜHRUNG EINER PRÜFUNG EINES FAHRZEUGS IN EINEM FAHRZEUGPRÜFSTAND**
VEHICLE TEST STAND AND METHOD FOR CARRYING OUT TESTING OF A VEHICLE IN A VEHICLE TEST STAND
BANC D'ESSAI DE VÉHICULES ET PROCÉDÉ PERMETTANT D'EFFECTUER L'ESSAI D'UN VÉHICULE SUR UN BANC D'ESSAI DE VÉHICULES

(30) Priorität: 29.08.2014 DE 102014112414
(43) Veröffentlichungstag der Anmeldung: 05.07.2017
(73) Patentinhaber: Dürr Assembly Products GmbH, 66346 Püttlingen (DE)
(72) Erfinder: PASKER, Bernd, 66346 Püttlingen (DE); TENTRUP, Thomas, 66663 Merzig-Mechern (DE); KURT, Ismail, 66333 Völklingen (DE); AREND, Sacha, F-57550 Dalem (FR); SCHMITZ, Sebastian, 66839 Schmelz - Michelbach (DE)
(74) Vertreter: Patentanwaltskanzlei Vièl & Wieske PartGmbB
(86) Internationale Anmeldenummer: PCT/DE2015/100344
(87) Internationale Veröffentlichungsnummer: WO 2016/029902

(56) Entgegenhaltungen:
- WO-A1-2016/026485
- DE-A1- 3 841 248
- JP-A- 2001 183 258
- JP-A- 2013 160 746
- JP-B2- 5 459 340

## Beschreibung

Die vorliegende Erfindung betrifft einen Fahrzeugprüfstand nach Anspruch 1 oder Anspruch 3 sowie ein Verfahren zur Durchführung einer Prüfung eines Fahrzeugs in einem Fahrzeugprüfstand nach Anspruch 5 oder 6.

Es ist bekannt, in Fahrzeugprüfständen die Räder von Fahrzeugen zur Durchführung der Prüfarbeiten auf Radaufnahmen zu positionieren. Diese Radaufnahmen sind in einer verbreiteten Ausführungsform als Doppelrollen ausgebildet. Das Rad des Fahrzeugs steht auf diesen beiden Doppelrollen auf. Wenigstens eine dieser Doppelrollen ist zur Durchführung von Prüfarbeiten im Sinne einer Rotation um die Längsachse der Rolle motorisch antreibbar bzw. bremsbar. Dadurch können zur Durchführung von Tests bei Beschleunigungen bzw. Bremsvorgängen Kräfte auf das Fahrzeug übertragen werden. Mit derartigen Prüfarbeiten können Tests von Bremsen sowie des Antriebsstrangs vorgenommen werden. Beispielsweise können Brems- und Antriebsleistungen gemessen werden oder auch Funktionstests von elektronischen Fahrwerkkomponenten wie ABS-Systemen oder ASR-Systemen vorgenommen werden.

Es ist auch bekannt, derartige Fahrzeugprüfstände als sogenannte Scheitelrollenprüfstände auszubilden. Während bei den im vorhergehenden Absatz beschriebenen Doppelrollenprüfständen die Räder des Fahrzeugs jeweils zwischen den beiden parallelen Rollen einsinken, stehen die Räder des Fahrzeugs bei einem Scheitelrollenprüfstand auf dem oberen Scheitelpunkt der einzelnen Rollen auf.

Bei der JP 5 459340 B2 und der JP 2001 183258 A wird die Fahrspur unterteilt in mehrere Teilbereiche. In jedem der Teilbereiche ist eine Radaufnahme in Längsrichtung der Fahrspur verschiebbar. An diese Radaufnahme schließen sich miteinander verbundene Tragelemente an, die insoweit quer zur Längsrichtung der Fahrspur beweglich miteinander verbunden sind, dass diese nach unten aus der Fahrspur herausbewegt werden können. Diese Tragelemente werden zwischen der Radaufnahme und dem jeweiligen vorderen und hinteren Ende des Teilbereiches so geführt und gelagert, dass diese das Fahrzeug beim Überfahren der Tragelemente tragen.

Aus der JP 2013-16ß746 A sowie der DE 38 41 248 A1 ist es ebenfalls bekannt, Radaufnahmen einzelner Räder in Längsrichtung des Fahrzeugs veränderbar zu positionieren. Soweit Tragelemente vorhanden sind, werden diese in Längsrichtung der Fahrspur verschoben zur Vervollständigung der Fahrspur abhängig von der Position der Radaufnahme.

Der vorliegenden Erfindung liegt die Aufgabe zu Grunde, einen Fahrzeugprüfstand so auszugestalten, dass dieser flexibel angepasst werden kann zur Prüfung von Fahrzeugen.

Diese Aufgabe wird nach der vorliegenden Erfindung gelöst durch einen Fahrzeugprüfstand gemäß Anspruch 1. Der Fahrzeugprüfstand ist ein Rollenprüfstand. Die Rollen des Rollenprüfstandes sind Bestandteil von jeweils einer Fahrspur des Fahrzeugprüfstandes. Dabei sind die Fahrspuren so ausgestaltet, dass das zu prüfende Fahrzeug bei der Bewegung entlang der Fahrspur stützend getragen wird. Nach der vorliegenden Erfindung sind die Rollen des Rollenprüfstandes als einzelne Rollen ausgestaltet, die in Längsrichtung der Fahrspur positionierbar sind. Die Positionierung ist abhängig vom Achsabstand bzw. der Achsposition eines zu prüfenden Fahrzeugs durchführbar. Weiterhin sind Tragelemente vorhanden, die als Einzelelemente in Längsrichtung der Fahrspur segmentiert sowie vor und/oder hinter den genannten einzelnen Rollen angeordnet sind. Außerdem sind Stellmittel vorhanden, mittels denen diese Tragelemente zur Positionierung der genannten einzelnen Rollen seitlich aus der Fahrspur herausbewegbar und in die Fahrspur hineinbewegbar sind.

Durch diese Ausgestaltung des Fahrzeugprüfstandes mit den Fahrspuren ergibt sich vorteilhaft, dass der Fahrzeugprüfstand in einfacher Weise an verschiedene Prüfsituationen angepasst werden kann. Diese Prüfsituationen betreffen dabei Fahrzeuge mit verschiedenen Positionen der Achsen in Längsrichtung des Fahrzeugs und entsprechend unterschiedlichen Achsabständen. Mit der vorliegenden Erfindung ist eine entsprechend einfache Anpassung des Prüfstandes an diese verschiedenen Prüfsituationen durchführbar.

Da die Rollen einzeln ausgeführt sind, können diese einzeln in die jeweilige Fahrspur integriert werden. Indem sich in Längsrichtung der Fahrspur die genannten Tragelemente anschließen, können die Rollen als Einzelrollen flexibel positioniert werden. Zur Positionierung können die Tragelemente aus der Fahrspur herausbewegt werden, so dass die Tragelemente für die Positionierung der Rollen in Längsrichtung des Fahrzeugprüfstandes entsprechend keine Hindernisse darstellen.

Dabei ist es möglich, jeweils eine einzelne Rolle vorzusehen als Radaufnahme und den Fahrzeugprüfstand damit als Scheitelrollenprüfstand zu betreiben.

Es ist auch möglich, in einer Fahrspur hintereinander angeordnete Rollen paarweise zusammenzufassen als Radaufnahme, die durch eine Doppelrolle gebildet wird. Der Fahrzeugprüfstand wird dann als Doppelrollenprüfstand betrieben.

Abhängig von den sich ergebenden Abständen zwischen den Rollen sowie der Position der Rollen in der Fahrspur nach deren Positionierung können wiederum die Tragelemente in die Fahrspur des Fahrzeugprüfstandes hineinbewegt werden, so dass sich eine geschlossene Fahrspur ergibt.

Hierbei erweist sich die Segmentierung der Tragelemente als vorteilhaft. Durch die Positionierung können die Rollen in Längsrichtung der Fahrspur an unterschiedlichen Stellen positioniert werden. Diese Positionierung ist abhängig von der Position der Achsen eines zu prüfenden Fahrzeugs bzw. vom Achsabstand eines zu prüfenden Fahrzeugs.

Werden die Rollen einzeln als Radaufnahme im Sinne eines Scheitelrollenprüfstandes betrieben, schließen sich die Tragelemente unmittelbar vor und hinter jeder einzelnen Rolle an.

Werden die Rollen dabei paarweise zusammengehörend als Doppelrollen einer einzigen Radaufnahme betrieben, sind zwischen diesen beiden Rollen, die gemeinsam als Doppelrollen eine Radaufnahme bilden, keine Tragelemente vorgesehen. In diesem Fall schließen sich die Tragelemente vor der vorderen der Doppelrollen einer Radaufnahme sowie hinter der hinteren der Doppelrollen der Radaufnahme an.

Dies entspricht der Ausgestaltung nach Anspruch 2, wonach die einzelnen Rollen in einer Fahrspur paarweise als jeweils eine Radaufnahme zusammenwirken.

Auch bei dieser Ausgestaltung ergeben sich Vorteile, wenn die Rollen einzeln ausgeführt sind. Handelt es sich bei den zu prüfenden Fahrzeugen um Lastkraftwagen, können die Achsabstände bei einigen Ausführungsformen der Lastkraftwagen vergleichsweise gering sein. Das bedeutet, dass die Radaufnahmen im Fahrzeugprüfstand entsprechend dicht in der Fahrspur hintereinander angeordnet sind. Da die Rollen einzeln ausgeführt sind, wird es dann möglich, die beiden Rollen einer Radaufnahme mit einem solchen (geringen) Abstand zueinander zu positionieren, dass diese Radaufnahmen entsprechend dicht hintereinander angeordnet sein können.

Werden die einzelnen Radaufnahmen durch eine Doppelrolle gebildet, gelten für die Einstellung der Abstände zwischen den beiden Rollen folgende Kriterien.

Das auf der Radaufnahme aufstehende Rad des Fahrzeugs sinkt zwischen die Doppelrollen der Radaufnahme ein. Dadurch ergeben sich bestimmte Randbedingungen an den Abstand der Doppelrollen der Radaufnahme.

Bei größeren Raddurchmessern kann der Abstand zwischen den beiden Rollen größer sein als bei geringeren Raddurchmessern.

Handelt es sich bei dem zu prüfenden Fahrzeug beispielsweise um einen Lastkraftwagen mit geringeren Achsabständen der Achsen des Lastkraftwagens müssen die Doppelrollen einer Radaufnahme dichter zueinander angeordnet werden. Würden bei der vorderen von zwei dicht beieinander angeordneten Achsen die Doppelrollen mit einem zu großen Abstand eingestellt, würde der Außenumfang der hinteren dieser beiden Doppelrollen in Längsrichtung des Fahrzeugs im Prüfstand so weit über den Radumfang des aufstehenden Rades nach hinten hinausragen, dass die vordere Rolle der Doppelrollen für das Rad an der dahinter befindlichen Achse nicht positioniert werden könnte.

Daraus ergibt sich, dass bei dicht beieinander angeordneten Achsen des Fahrzeugs und entsprechend geringen Achsabständen die Doppelrollen für die Durchführung der Prüfvorgänge mit entsprechend geringem Abstand eingestellt werden müssen.

Die Antriebs- bzw. Bremsleistung des zu prüfenden Fahrzeugs, die bei den Prüfvorgängen wirkt, hat wesentlichen Einfluss darauf, wie stark das entsprechende Rad des Fahrzeugs und damit das Fahrzeug insgesamt bei der Durchführung der Prüfung gegenüber der Rolle angehoben wird im Sinne eines Herausbewegens des entsprechenden Rades aus der Radaufnahme. Wenn der Prüfung entsprechend große Antriebs- bzw. Bremsleistungen zu Grunde liegen, ist es vorteilhaft, wenn die Rollen weiter auseinanderstehen, weil das Fahrzeug dann weniger leicht aus dem Fahrzeugprüfstand herausgehoben wird.

Diesem "Herausheben" des Fahrzeugs wirkt das Gewicht des Fahrzeugs entgegen, speziell die Achslast auf die Achse, an der das Rad montiert ist, das auf der entsprechenden Radaufnahme aufsteht.

Indem der Abstand zwischen den beiden Rollen einer Radaufnahme veränderbar ist, kann ein Fahrzeugprüfstand vorteilhaft mit geringem Aufwand an unterschiedliche zu untersuchende Fahrzeuge angepasst werden. Die Einstellung des Abstandes der beiden Rollen zueinander kann auch geändert werden, während das Rad des Fahrzeugs auf der Radaufnahme aufsteht. Dies ist beispielsweise im Zusammenhang mit Anspruch 5 beschrieben.

Indem die Rollen einzeln ausgeführt sind und in der Fahrspur des Fahrzeugprüfstandes durch die Tragelemente ergänzt werden, die wiederum aus der Fahrspur heraus und in die Fahrspur hinein bewegt werden können, können die Rollen vorteilhaft in der Fahrspur flexibel positioniert werden. Durch ein Hineinbewegen einer entsprechenden Zahl von Tragelementen an den entsprechenden Positionen ergibt sich dennoch eine geschlossene Fahrspur.

Diese Flexibilität gilt sowohl für die Zahl der Achsen eines zu prüfenden Fahrzeugs als auch für die Position der Achsen. Gerade bei Lastkraftwagen und Bussen ist es üblich, dass ein Rahmen vorgesehen wird, an dem je nach Anforderungen an das Fahrzeug an unterschiedlichen Stellen Achsen montiert werden können. Durch die Flexibilität des Prüfstandes wird es möglich, flexibel auf diese Ausgestaltungen der Fahrzeuge eingehen zu können und diese trotz der unterschiedlichen Achsanordnungen - sowohl was die Zahl der Achsen betrifft als auch, was den Abstand der Achsen betrifft - mit einem einzigen Fahrzeugprüfstand prüfen zu können, der für die Prüfvorgänge einfach an das jeweilige Fahrzeug angepasst werden kann.

Selbst wenn ein Fahrzeughersteller bisher lediglich dreiachsige Lastkraftwagen gebaut hat und der Prüfstand in der Fahrspur nur mit Rollen ausgestattet ist, um dreiachsige Lastkraftwagen prüfen zu können, kann dieser Fahrzeugprüfstand dennoch einfach auch für die Prüfung von vierachsigen Lastkraftwagen nachgerüstet werden, indem eine oder mehrere weitere Rollen in der Fahrspur ergänzt werden. Gegebenenfalls können dafür eine entsprechende Zahl von Tragelemente aus der jeweiligen Fahrspur entfernt werden.

Auch wenn die Rollen einzeln ausgeführt sind, werden die Rollen synchronisiert bewegt, wenn die Rollen paarweise als Doppelrollen einer einzelnen Radaufnahme verwendet werden. Dies bedeutend nicht zwingend, dass die beiden Rollen über einen vollen Bewegungsablauf einer Verstellung der Rollen synchronisiert sein müssen. Eine Synchronisierung in Sinne der Erfindung liegt dann vor, wenn die anzusteuernden Sollpositionen der beiden Rollen so aufeinander abgestimmt sind, dass sich zwischen den beiden Rollen einer Radaufnahme ein bestimmter Abstand ergibt.

Die Ausführungsform nach Anspruch 3 betrifft eine weitere Lösung der Aufgabe nach der vorliegenden Erfindung durch einen Fahrzeugprüfstand. Der Fahrzeugprüfstand ist ein Rollenprüfstand, der bei der Ausführungsform nach Anspruch 3 ein Doppelrollenprüfstand ist. Die Rollen des Rollenprüfstandes sind Bestandteil von jeweils einer Fahrspur des Fahrzeugprüfstandes. Die Fahrspuren sind so ausgestaltet, dass das zu prüfende Fahrzeug bei der Bewegung entlang der Fahrspur stützend getragen wird. Da es sich um einen Doppelrollenprüfstand handelt, sind die Rollen des Rollenprüfstandes paarweise einander zugeordnet (d.h. als Doppelrollen). Diese paarweise einander zugeordneten Rollen bilden jeweils eine Radaufnahme. Gemäß Anspruch 3 sind die paarweise einander zugeordneten Rollen des Rollenprüfstandes mit längenveränderlichen Verbindungsmitteln versehen, mit denen diese paarweise einander zugeordneten Rollen jeweils paarweise miteinander verbunden sind. Die längenveränderlichen Verbindungsmittel sind nur zwischen den beiden einander zugeordneten Rollen angeordnet. Die paarweise einander zugeordneten Rollen sind in Längsrichtung der Fahrspur positionierbar. Die Positionierung ist abhängig vom Achsabstand bzw. der Achsposition eines zu prüfenden Fahrzeugs durchführbar. Weiterhin sind Tragelemente vorhanden, die in Längsrichtung der Fahrspur als Einzelelemente segmentiert sind sowie vor und/oder hinter den genannten Paaren von einander zugeordneten Rollen angeordnet sind. Außerdem sind Stellmittel vorhanden, mittels denen diese Tragelemente zur Positionierung der genannten paarweise einander zugeordneten Rollen seitlich aus der Fahrspur herausbewegbar und in die Fahrspur hineinbewegbar sind.

Im Unterschied zur Ausgestaltung nach Anspruch 1, insbesondere auch der Ausgestaltung nach Anspruch 2, handelt es sich hierbei um einen Doppelrollenprüfstand, bei dem die paarweise einander zugeordneten Rollen mechanisch miteinander verbunden sind.

Die Verbindungsmittel sind längenveränderlich. Dadurch wird vorteilhaft erreicht, dass der Abstand zwischen den beiden einander zugeordneten Rollen, die eine Radaufnahme bilden, veränderbar ist.

Weiterhin sind diese Verbindungsmittel so ausgestaltet und angeordnet, dass sich diese lediglich zwischen den beiden Rollen befinden, die gemeinsam eine Radaufnahme bilden. Vorteilhaft entstehen damit durch diese paarweise Verbindung der beiden Rollen keine Teile, die die Größe der Radaufnahme in Längsrichtung der Fahrspur der Fahrzeugprüfstandes vergrößern, indem diese Teile über die vordere der beiden Rollen nach vorne bzw. über die hintere der beiden Rollen nach hinten überstehen. Dadurch wird vorteilhaft erreicht, dass die Radaufnahmen dicht aneinander positioniert werden können, indem die vordere Rolle der hinteren Radaufnahme dicht an die hintere Rolle der vorderen Radaufnahme positioniert werden kann.

Durch die Verbindungsmittel ergibt sich die Möglichkeit, eine Radaufnahme, die aus zwei Rollen besteht, mit lediglich einem Antriebsmittel zu positionieren. Der Abstand zwischen den beiden Rollen kann durch die längenveränderlichen Verbindungsmittel eingestellt werden. Insbesondere muss also nicht jede Rolle für sich ein einzelnes Antriebsmittel aufweisen, um diese Rolle für sich entlang der Fahrspur bewegen zu können.

Bei der Ausgestaltung nach Anspruch 4 sind Antriebsmittel der Rollen unterhalb der Rollen angebracht.

Diese Antriebsmittel der Rollen können sowohl Antriebsmittel sein, mittels denen die Rollen in Längsrichtung der Fahrspur des Fahrzeugprüfstandes verstellt werden als auch Antriebsmittel, mittels denen die Rollen bei Prüfvorgängen im Sinne einer Drehung um die Längsachse der Rolle angetrieben bzw. gebremst werden.

Durch die Anordnung dieser Antriebsmittel unterhalb der Rollen wird erreicht, dass die Rollen in Längsrichtung der Fahrspur des Fahrzeugprüfstandes eine minimale Ausdehnung aufweisen. Dies erweist sich insbesondere dann als vorteilhaft, wenn die Rollen einer Radaufnahme mit einem geringen Abstand zueinander positioniert werden sollen. Dies gilt sowohl dann, wenn zwei Rollen gemeinsam als Doppelrollen einer Radaufnahme verwendet werden sollen sowie auch, wenn die Rollen mit geringem Abstand zueinander positioniert werden müssen, weil diese als Doppelrollen einer Radaufnahme verwendet werden bei geringem Achsabstand.

Anspruch 5 betrifft ein Verfahren zur Durchführung einer Prüfung eines Fahrzeugs auf einem Fahrzeugprüfstand, der im Sinne des Anspruchs 2 als Doppelrollenprüfstand ausgestaltet ist. Dabei werden die beiden Rollen der Radaufnahme in einer Betriebsposition ("Ausfahrposition") auf einen minimalen Abstand zwischen den beiden Rollen eingestellt für eine Ausfahrposition des Fahrzeugs aus dem Fahrzeugprüfstand.

Bei bisherigen Ausführungsformen der Radaufnahmen mittels Doppelrollen ist es bekannt, für das Ausfahren eines Fahrzeugs ein Hebeelement vorzusehen. Dieses Hebeelement ist zwischen den beiden Rollen angeordnet und wird vor dem Ausfahren des Fahrzeugs nach oben ausgefahren. Das Hebeelement greift - zumindest im Wesentlichen - am Aufstandspunkt des Rades auf einer ebenen Fläche an. Dadurch wird das Rad aus der Position nach oben angehoben, in der das Rad auf den beiden Rollen der Radaufnahme aufsteht und damit zwischen diese beiden Rollen eingesunken ist. Wenn das entsprechende Rad weit genug angehoben ist, kann das Fahrzeug aus dem Fahrzeugprüfstand ausfahren. Dazu wird noch zumindest die in Fahrtrichtung vor dem Fahrzeug befindliche Rolle gebremst. Durch das Anheben des Rades mittels des Hebeelementes wird vermieden, dass sich das Fahrzeug mit seiner Antriebsleistung gegen die gebremste Rolle selbst aus dem Fahrzeugprüfstand "herausheben" muss.

Bei der Ausgestaltung nach der vorliegenden Erfindung gemäß Anspruch 5 kann dieses Anheben des Rades in einfacher Weise realisiert werden, indem die beiden Rollen einer Radaufnahme so aufeinander zu bewegt werden, dass sich zwischen den beiden Rollen ein minimaler Abstand einstellt.

Vorteilhaft sind die Rollen bei einer Bewegung in Längsrichtung bei einem aufstehenden Rad ungebremst, so dass die Rollen bei der Bewegung entlang des Umfangs des Rades frei drehen können. Dadurch ist die Bewegung gegenüber dem Rad weitgehend frei von Reibungskräften.

Allerdings müssen bei der Bewegung nach Anspruch 5 die erforderlichen Kräfte aufgebracht werden zum Anheben des Rades und damit des Fahrzeuges insgesamt. Die beiden Rollen werden entlang dem äußeren Umfang des Rades derart bewegt, dass sich beide Rollen dem unteren Punkt des Rades annähern, auf dem das Rad auf einer ebenen Unterlage aufstehen würde. Dadurch wird das Rad und damit das Fahrzeug insgesamt angehoben.

Wenn die beiden Rollen im Minimalabstand zueinander positioniert sind, ist das entsprechende Rad des Fahrzeugs maximal angehoben. Zum Ausfahren aus dem Fahrzeugprüfstand muss sich das Fahrzeug aus eigener Kraft nur noch minimal selbst anheben gegenüber der (dann gebremsten) Rolle, über die das Fahrzeug aus dem Fahrzeugprüfstand ausfährt.

Wenn der Abstand zwischen den beiden Rollen einer Radaufnahme entsprechend verringert wurde, kann gegebenenfalls noch ein weiteres Tragelement in die Fahrspur hineinbewegt werden.

Gemäß Anspruch 6 wird der Abstand zwischen den beiden Rollen einer Radaufnahme zur Durchführung von Prüfarbeiten an einem zu untersuchenden Fahrzeug eingestellt abhängig von einem oder mehreren der folgenden Parameter:
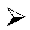 Durchmesser des Rades des Fahrzeugs,
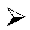 Achsabstand der Achsen des Fahrzeugs,
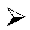 Achslast des Fahrzeugs an der Achse, an der das jeweils in der Radaufnahme positionierte Rad montiert ist.

Die Begründung für die Abhängigkeit der Einstellung des Abstandes zwischen den beiden Rollen abhängig von einem oder mehreren der genannten Parameter wurde bereits im Zusammenhang mit Anspruch 1 erläutert.

Ein Ausführungsbeispiel der Erfindung ist in der Zeichnung dargestellt. Es zeigt dabei:
- Fig. 1:: einen Fahrzeugprüfstand mit einem LKW,
- Fig. 2:: den Fahrzeugprüfstand nach Figur 1 in einer Ansicht von vorne,
- Fig. 3:: ein erstes Ausführungsbeispiel einer Rolle und
- Fig. 4:: ein weiteres Ausführungsbeispiel einer Rolle.

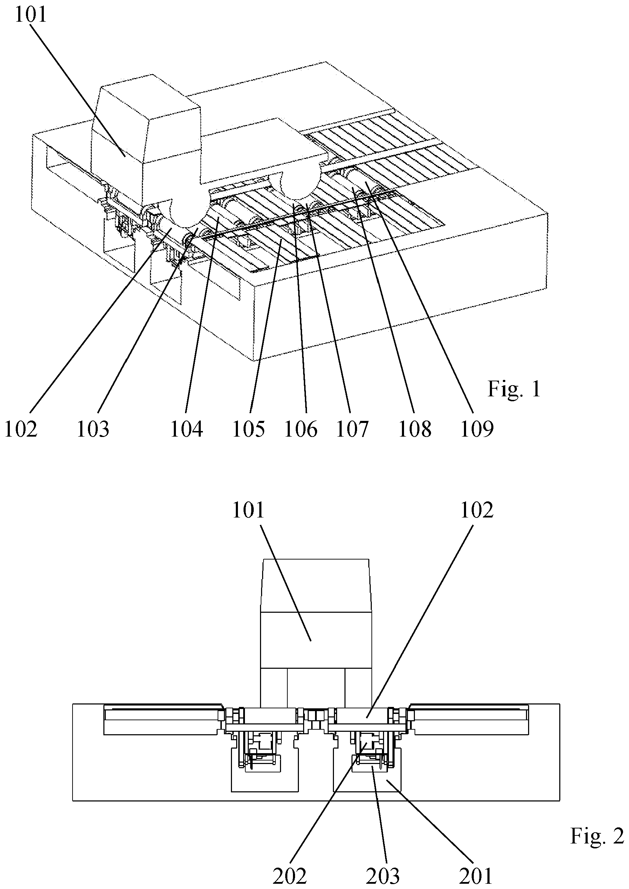

Figur 1 zeigt einen Fahrzeugprüfstand mit einem LKW 101. Die entsprechenden Bauteile der linken Fahrspur des Fahrzeugprüfstandes sind mit Bezugszeichen versehen und sollen nachfolgend erläutert werden. Bei dem LKW 101 handelt es sich um ein Zugfahrzeug für einen Auflieger. Dieses Zugfahrzeug weist in dem dargestellten Ausführungsbeispiel zwei Achsen auf.

Es sind Radaufnahmen zu sehen, die jeweils aus zwei einander zugeordneten Rollen bestehen. Dadurch ergeben sich jeweils Radaufnahmen, die als Doppelrollen ausgebildet sind. Diese Radaufnahmen bestehen aus den Paaren der Rollen 102, 103; 106, 107 sowie 108, 109. Es ist zwischen den beiden Achsen des LKW 101 noch ein weiteres Paar von Rollen zu sehen, die nicht mit Bezugszeichen versehen sind. Da der LKW 101 in dem dargestellten Ausführungsbeispiel lediglich zweiachsig ist, wird die nicht mit Bezugszeichen versehene Radaufnahme nicht benötigt. Dies gilt ebenso für die Radaufnahme, die durch die beiden Rollen 108 und 109 gebildet wird.

Weiterhin ist zu sehen, dass zwischen den Radaufnahmen sowie auch hinter der hinteren Radaufnahme Tragelemente 105 angeordnet sind. Diese Tragelemente 105 stellen jeweils Einzelelemente dar, die in Längsrichtung der Fahrspur des Fahrzeugprüfstandes segmentiert sind. Die Tragelemente 105 decken die Grube ab, in der sich die Antriebsmittel der Rollen 102, 103, 106, 107, 108, 109 befinden.

Durch diese Tragelemente 105 wird verhindert, dass ein Rad des Fahrzeugs in die Grube fallen kann, wenn das Rad des Fahrzeugs bei einem Prüfvorgang aus der Radaufnahme herausgehoben wird. Dies gilt auch, wenn das Rad des Fahrzeugs nicht auf der Radaufnahme aufsteht, weil das Fahrzeug in den Fahrzeugprüfstand hineinfährt bzw. aus dem Fahrzeugprüfstand herausfährt.

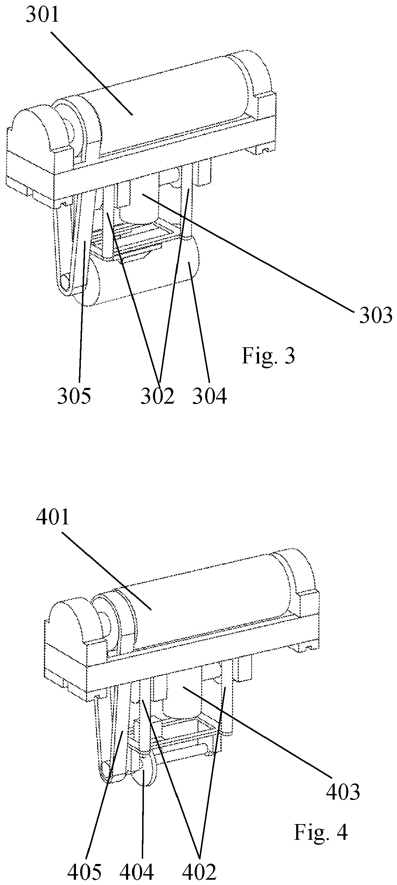

In dem dargestellten Ausführungsbeispiel sind die Rollen 102, 103, 106, 107, 108, 109 jeweils einzeln für sich beweglich in Längsrichtung der Fahrspur des Fahrzeugprüfstandes. Dies entspricht der Ausführungsform nach den Figuren 3 und 4.

Es ist auch möglich, diese Rollen paarweise miteinander mechanisch zu verbinden (Paare: 102, 103; 106, 107; 108, 109). Diese Verbindungsmittel sind dann längenveränderlich ausgestaltet, um den Abstand zwischen den beiden Rollen verändern zu können, die einander paarweise zugeordnet sind. Außerdem sind diese Verbindungsmittel so ausgestaltet und angeordnet, dass diese nicht in Längsrichtung der Fahrspur des Fahrzeugprüfstandes nach vorne über die vordere (102, 106, 108) sowie nach hinten über die hintere (103, 107, 109) der Rollen überstehen, die paarweise eine Radaufnahme bilden. Dadurch lässt sich beispielsweise bei einem dreiachsigen Zugfahrzeug erreichen, dass die vordere Rolle 108 der hinteren Radaufnahme dicht an die hintere Rolle 107 der in der Fahrspur davor befindlichen Radaufnahme positioniert werden kann. Bei derartigen dreiachsigen Zugfahrzeugen weisen die beiden hinteren Achsen einen geringen Abstand auf, so dass dort die Radaufnahmen in der Fahrspur entsprechend dicht zueinander positioniert werden müssen. Dies erfordert, dass die Rollen 107 und 108 nur einen geringen Abstand aufweisen.

Damit die Tragelemente 105 dabei den Rollen 102, 103, 106, 107, 108, 109 bei deren Bewegung in Längsrichtung der Fahrspur des Fahrzeugprüfstandes nicht im Weg sind, können die Tragelemente 104, 105 in dem dargestellten Ausführungsbeispiel seitlich aus der Fahrspur herausbewegt werden.

Die Bewegung der Tragelemente 104, 105 seitlich aus der Fahrspur heraus bzw. in die Fahrspur hinein ist in weiteren Einzelheiten in der nicht vorveröffentlichten deutschen Patentanmeldung mit dem amtlichen Aktenzeichen des Deutschen Patent- und Markenamtes 10 2014 111 998.3 beschrieben.

Es ist ersichtlich, dass der Bereich neben der Fahrspur des Fahrzeugprüfstandes, in den die Tragelemente entsprechend der Darstellung des Tragelementes 104 hineingeschoben werden, vorteilhaft mit einer Abdeckung versehen ist.

Es ist beispielsweise möglich, den dargestellten Prüfstand für die Prüfung eines Fahrzeugs mit größerem Achsabstand einzustellen, indem die hinter den Rollenpaaren 106, 107 sowie 108, 109 befindlichen Tragelemente seitlich aus der Fahrspur herausbewegt werden. Dadurch können die Rollenpaare 106, 107 sowie 108, 109 in der Fahrspur nach hinten bewegt (positioniert) werden. Entsprechend werden die Tragelemente wieder in die Fahrspur hineingeschoben, die benötigt werden, um eine geschlossene Fahrspur zu erhalten. Die Tragelemente werden wieder in die Fahrspur hineingeschoben, wenn die entsprechenden Rollenpaare 106, 107 sowie 108, 109 bei der Positionierung die Position des jeweiligen Tragelementes passiert haben. Es bleiben dabei die Tragelemente seitlich aus der Fahrspur herausgeschoben, die sich an der Position befinden, die der neuen Sollposition der Rollenpaare 106, 107 sowie 108, 109 entspricht.

Damit befinden sich Tragelemente, die sich in der dargestellten Anordnung der Figur 1 in Fahrtrichtung eines im Prüfstand befindlichen Fahrzeugs hinter den Rollenpaaren 106, 107 sowie 108, 109 befinden, nach der neuen Positionierung der Rollenpaare 106, 107 sowie 108, 109 ggf. in Fahrtrichtung eines im Prüfstand befindlichen Fahrzeugs vor den Rollenpaaren 106, 107 sowie 108, 109.

Figur 2 zeigt den Fahrzeugprüfstand nach Figur 1 mit dem darauf stehenden LKW 101 in einer Ansicht von vorne. Es ist wiederum die Rolle 102 in der linken Fahrspur des Fahrzeugprüfstandes mit Bezugszeichen versehen.

Es ist ein Aufnahmeraum 201 unterhalb der Fahrspur des Fahrzeugprüfstandes vorhanden, in dem die Antriebsmittel 202 und 203 der Rolle 102 untergebracht sind. Das Antriebsmittel 202 ist ein Antriebsmittel, mit dem die Rolle 102 in Längsrichtung der Fahrspur des Fahrzeugprüfstandes positionierbar ist. Das Antriebsmittel 203 ist in dem dargestellten Ausführungsbeispiel ein Elektromotor, über den die Rolle 102 im Sinne einer Rotation um deren Längsachse sowohl im Sinne einer Beschleunigung sowie auch im Sinne eines Bremsens angetrieben werden kann. Dadurch können die Prüfarbeiten an dem Fahrzeug durchgeführt werden.

Figur 3 zeigt ein erstes Ausführungsbeispiel einer Rolle 301. Hierbei handelt es sich um eine sogenannte aktive Rolle.

Diese Rolle 301 ist auf einem Tragrahmen 302 montiert. An diesem Tragrahmen 302 ist ein Elektromotor 303 angebracht, durch den der Tragrahmen 302 und damit auch die Rolle 301 in Längsrichtung der Fahrspur des Fahrzeugprüfstandes positioniert werden kann.

Außerdem ist ein Elektromotor 304 zu sehen, durch den die Rolle 301 über den Treibriemen 305 im Sinne einer Drehung um deren Längsachse sowohl im Sinne einer Beschleunigung als auch Sinne eines Abbremsens angetrieben werden kann.

Figur 4 zeigt ein weiteres Ausführungsbeispiel einer Rolle 401, die eine sogenannte passive Rolle ist.

Die Rolle 401 ist ebenfalls auf einem Tragrahmen 402 angebracht, der durch den Elektromotor 403 in Längsrichtung der Fahrspur eines Fahrzeugprüfstandes positioniert werden kann.

Mit der Bezugsziffer 404 ist eine Bremsscheibe bezeichnet. Die Bremsmomente dieser Bremsscheibe werden über den Treibriemen 405 auf die Rolle 401 übertragen. Dadurch kann die Rolle 401 bei deren Rotation um die Längsachse gebremst werden.

Es ist offensichtlich, dass die Positionierung der Rollen in Längsrichtung der Fahrspur auch in anderer Weise erfolgen kann als dies in den Ausführungsbeispielen erläutert wurde. Beispielsweise kann in der Grube unterhalb der Fahrspur ein umlaufendes Antriebselement angeordnet sein wie beispielsweise eine Kette, ein Seil, ein Band oder ähnliches. Die einzelnen Rollen können dann mit Kopplungselementen versehen werden, die in das umlaufende Antriebselement einkoppelbar sind. Durch diese Einkopplung können die Rollen in Längsrichtung des Fahrzeugprüfstandes bewegt werden. Abhängig davon, ob die Einkopplung auf dem oberen Teil oder dem unteren Teil des umlaufenden Antriebselementes erfolgt, ergibt sich die Bewegungsrichtung der jeweiligen Rolle. Bei dieser Ausgestaltung müsste dann nicht jede Rolle mit einem einzelnen Antrieb zu deren Positionierung versehen werden.

Es ist weiterhin ersichtlich, dass sich durch die Positionierung der Rollen in Verbindung mit den in die Fahrspur einschiebbaren und ausschiebbaren Tragelementen eine geschlossene Fahrspur im Fahrzeugprüfstand erreichen lässt, bei der keine Lücken oberhalb der Grube entstehen, in die ein Rad des Fahrzeugs hineinrutschen könnte. Wenn die Rollen, die eine Radaufnahme bilden, dichter zueinander positioniert werden, kann ggf. ein oder mehrere Tragelemente mehr in die Fahrspur hineingeschoben werden gegenüber einer Betriebsweise mit einem größeren Abstand der Rollen, die eine Radaufnahme bilden. Abhängig davon, wie viele Tragelemente in die Fahrspur hineingeschoben werden, können so die unterschiedlichen Abmessungen der Radaufnahmen (als Doppelrollen) in Längsrichtung der Fahrspur kompensiert werden, die sich aus den unterschiedlichen Abständen der Rollen ergeben, die gemeinsam eine Radaufnahme darstellen.

## Patentansprüche

1. Fahrzeugprüfstand, wobei der Fahrzeugprüfstand ein Rollenprüfstand ist,
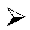 wobei die Rollen (102, 103, 106, 107, 108, 109, 301, 401) des Rollenprüfstandes Bestandteil von jeweils einer Fahrspur des Fahrzeugprüfstandes sind,
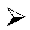 wobei die Fahrspuren so ausgestaltet sind, dass das zu prüfende Fahrzeug (101) bei der Bewegung entlang der Fahrspur stützend getragen wird, wobei die Rollen (102, 103, 106, 107, 108, 109, 301, 401) des Rollenprüfstandes als einzelne Rollen (301, 401) ausgestaltet sind,
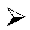 die in Längsrichtung der Fahrspur positionierbar sind,
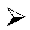 wobei die Positionierung abhängig vom Achsabstand bzw. der Achsposition eines zu prüfenden Fahrzeugs (101) durchführbar ist
und
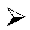 wobei Tragelemente (104, 105) vorhanden sind,
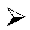 die in Längsrichtung der Fahrspur als Einzelelemente (104, 105) segmentiert sind, sowie
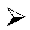 vor und/oder hinter den genannten einzelnen Rollen (102, 103, 106, 107, 108, 109) angeordnet sind,
**dadurch gekennzeichnet, dass** Stellmittel vorhanden sind, mittels denen diese Tragelemente (104, 105) zur Positionierung der genannten einzelnen Rollen (102, 103, 106, 107, 108, 109, 301, 401) seitlich aus der Fahrspur herausbewegbar und in die Fahrspur hineinbewegbar sind.

2. Fahrzeugprüfstand nach Anspruch 1, **dadurch gekennzeichnet, dass** die einzelnen Rollen (102, 103, 106, 107, 108, 109) in einer Fahrspur paarweise als jeweils eine Radaufnahme (102, 103; 106, 107; 108, 109) zusammenwirken.

3. Fahrzeugprüfstand, wobei der Fahrzeugprüfstand ein Rollenprüfstand ist,
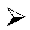 wobei die Rollen (102, 103, 106, 107, 108, 109) des Rollenprüfstandes Bestandteil von jeweils einer Fahrspur des Fahrzeugprüfstandes sind,
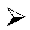 wobei die Fahrspuren so ausgestaltet sind, dass das zu prüfende Fahrzeug (101) bei der Bewegung entlang der Fahrspur stützend getragen wird,
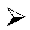 wobei die Rollen (102, 103, 106, 107, 108, 109) des Rollenprüfstandes paarweise (102, 103; 106, 107; 108, 109) als Doppelrollen einander zugeordnet sind,
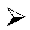 wobei diese paarweise einander zugeordneten Rollen jeweils eine Radaufnahme (102, 103; 106, 107; 108, 109) bilden,
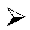 wobei die paarweise einander zugeordneten Rollen (102, 103; 106, 107; 108, 109) des Rollenprüfstandes mit längenveränderlichen Verbindungsmitteln versehen sind, mit denen diese paarweise einander zugeordneten Rollen (102, 103; 106, 107; 108, 109) jeweils paarweise miteinander verbunden sind,
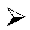 wobei die längenveränderlichen Verbindungsmittel nur zwischen den beiden paarweise einander zugeordneten Rollen (102, 103; 106, 107; 108, 109) angeordnet sind,
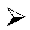 wobei die paarweise einander zugeordneten Rollen (102, 103; 106, 107; 108, 109) in Längsrichtung der Fahrspur positionierbar sind,
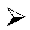 wobei die Positionierung abhängig vom Achsabstand bzw. der Achsposition eines zu prüfenden Fahrzeugs (101) durchführbar ist,
und
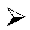 wobei Tragelemente (104, 105) vorhanden sind,
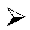 die in Längsrichtung der Fahrspur als Einzelelemente (104, 105) segmentiert sind,
sowie
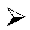 vor und/oder hinter den genannten Paaren von einander zugeordneten Rollen (102, 103; 106, 107; 108, 109) angeordnet sind, **dadurch gekennzeichnet, dass** Stellmittel vorhanden sind, mittels denen diese Tragelemente (104, 105) zur Positionierung der genannten paarweise einander zugeordneten Rollen (102, 103; 106, 107; 108, 109) seitlich aus der Fahrspur herausbewegbar und in die Fahrspur hineinbewegbar sind.

4. Fahrzeugprüfstand nach einem der Ansprüche 1 bis 3,
**dadurch gekennzeichnet, dass** Antriebsmittel (202, 203, 303, 304, 403, 404) der Rollen (102, 103, 106, 107, 108, 109, 301, 401) unterhalb der Rollen (102, 103, 106, 107, 108, 109, 301, 401) angebracht sind (201).

5. Verfahren zur Durchführung einer Prüfung eines Fahrzeugs in einem Fahrzeugprüfstand gemäß einem der Ansprüche 2 bis 4,
**dadurch gekennzeichnet, dass** die beiden Rollen (102, 103; 106, 107; 108, 109) der Radaufnahme auf einen minimalen Abstand zwischen den beiden Rollen (102, 103; 106, 107; 108, 109) eingestellt werden für eine Ausfahrposition des Fahrzeugs aus dem Fahrzeugprüfstand.

6. Verfahren zur Durchführung einer Prüfung eines Fahrzeugs in einem Fahrzeugprüfstand gemäß einem der Ansprüche 2 bis 4,
**dadurch gekennzeichnet, dass** der Abstand zwischen den beiden Rollen (102, 103; 106, 107; 108, 109) einer Radaufnahme zur Durchführung von Prüfarbeiten an einem zu untersuchenden Fahrzeug eingestellt wird abhängig von einem oder mehreren der folgenden Parameter:
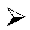 Durchmesser des Rades des Fahrzeugs,
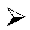 Achsabstand der Achsen des Fahrzeugs,
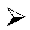 Achslast des Fahrzeugs an der Achse, an der das jeweils in der Radaufnahme positionierte Rad montiert ist.

## Claims

1. Vehicle test stand, wherein the vehicle test stand is a roller test stand,
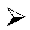 wherein the rollers (102, 103, 106, 107, 108, 109, 301, 401) of the roller test stand are part of in each case one lane of the vehicle test stand,
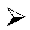 wherein the lanes are configured in such a way that the vehicle (101) to be tested is supportively carried during the movement along the lane, wherein the rollers (102, 103, 106, 107, 108, 109, 301, 401) of the roller test stand are configured as individual rollers (301, 401),
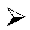 which can be positioned in the longitudinal direction of the lane,
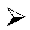 wherein the positioning can be conducted dependent upon the distance between axles or the axle position of a vehicle (101) to be tested,
and
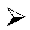 wherein supporting elements (104, 105) are provided,
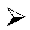 which are segmented as individual elements (104, 105) in the longitudinal direction of the lane,
as well as
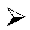 are arranged in front of and/or behind the mentioned individual rollers (102, 103, 106, 107, 108, 109),
**characterized in that** adjustment means are provided, by means of which these supporting elements (104, 105) can be moved laterally out of the lane and be moved into the lane in order to position the mentioned individual rollers (102, 103, 106, 107, 108, 109, 301, 401).

2. Vehicle test stand according to claim 1, **characterized in that** the individual rollers (102, 103, 106, 107, 108, 109) in one lane cooperate in pairs as in each case one wheel receptacle (102, 103; 106, 107, 108, 109).

3. Vehicle test stand, wherein the vehicle test stand is a roller test stand,
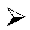 wherein the rollers (102, 103, 106, 107, 108, 109) of the roller test stand are part of in each case one lane of the vehicle test stand,
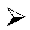 wherein the lanes are configured in such a way that the vehicle (101) to be tested is supportively carried during the movement along the lane,
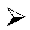 wherein the rollers (102, 103, 106, 107, 108, 109) of the roller test stand are, in pairs (102, 103; 106, 107; 108, 109), assigned to one another as double rollers,
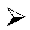 wherein these pair-wise assigned rollers respectively form one wheel receptacle (102, 103; 106, 107; 108, 109),
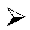 wherein the pair-wise assigned rollers (102, 103; 106, 107; 108, 109) of the roller test stand are provided with length-variable connection means, by means of which these pair-wise assigned rollers (102, 103; 106, 107; 108, 109) are respectively connected to one another in pairs,
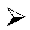 wherein the length-variable connection means are arranged only between the two pair-wise assigned rollers (102, 103; 106, 107; 108, 109),
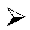 wherein the pairwise-assigned rollers (102, 103; 106, 107; 108, 109) can be positioned in the longitudinal direction of the lane,
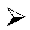 wherein the positioning can be conducted dependent upon the distance between the axles or the axle position of a vehicle to be tested (101),
and
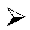 wherein supporting elements (104, 105) are provided,
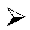 which are segmented as individual elements (104, 105) in the longitudinal direction of the lane,
as well as
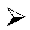 are arranged in front of and/or behind the mentioned assigned individual rollers (102, 103; 106, 107; 108, 109),
**characterized in that** adjustment means are provided, by means of which these supporting elements (104, 105) can be moved laterally out of the lane and be moved into the lane in order to position the mentioned pairwise-assigned rollers (102, 103; 106, 107; 108, 109).

4. Vehicle test stand according to any one of claims 1 to 3,
**characterized in that** drive means (202, 203, 303, 304, 403, 404) of the rollers (102, 103, 106, 107, 108, 109, 301, 401) are mounted (201) below the rollers (102, 103, 106, 107, 108, 109, 301, 401).

5. Method for carrying out a test of a vehicle in a vehicle test stand according to any one of claims 2 to 4,
**characterized in that** the two rollers (102, 103; 106, 107; 108, 109) of the vehicle receptacle are set to a minimum distance between the two rollers (102, 103; 106, 107; 108, 109) for an exit position of the vehicle out of the vehicle test stand.

6. Method for carrying out a test of a vehicle in a vehicle test stand according to any one of claims 2 to 4,
**characterized in that** the distance between the two rollers (102, 103; 106, 107; 108, 109) of a wheel receptacle is adjusted to conduct test works on a vehicle to be checked, dependent upon one or multiple of the following parameters:
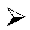 diameter of the wheel of the vehicle,
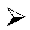 distance between axles of the vehicle,
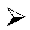 axle load of the vehicle at the axle where the wheel respectively positioned in the wheel receptacle, is mounted.

## Revendications

1. Banc d'essai de véhicules, le banc d'essai de véhicules étant un banc d'essai à rouleaux
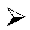 les rouleaux (102, 103, 106, 107, 108, 109, 301, 401) du banc d'essai à rouleaux étant chacun un composant d'une voie de roulement du banc d'essai de véhicules,
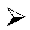 les voies de roulement étant conçues de telle sorte que le véhicule (101) à contrôler est supporté en appui lors de son déplacement le long de la voie de roulement, les rouleaux (102, 103, 106, 107, 108, 109, 301, 401) du banc d'essai à rouleaux étant conçus sous la forme de rouleaux individuels (301, 401)
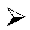 qui peuvent être positionnés dans la direction longitudinale de la voie de roulement,
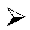 le positionnement pouvant être effectué en fonction de l'empattement ou de la position des essieux d'un véhicule (101) à contrôler
et
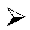 des éléments support (104, 105) étant présents,
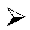 lesquels sont segmentés dans la direction longitudinale de la voie de roulement sous la forme d'éléments individuels (104, 105),
et
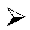 sont disposés devant et/ou derrière lesdits rouleaux individuels (102, 103, 106, 107, 108, 109),
**caractérisé en ce que** des moyens de réglage sont présents au moyen desquels ces éléments support (104, 105) peuvent être déplacés latéralement hors de la voie de roulement et dans la voie de roulement pour positionner desdits rouleaux individuels (102, 103, 106, 107, 108, 109, 301, 401).

2. Banc d'essai de véhicules selon la revendication 1,
**caractérisé en ce que,** dans une voie de roulement, les rouleaux individuels (102, 103, 106, 107, 108, 109) coopèrent par paire chacune comme un logement de roue (102, 103 ; 106, 107 ; 108, 109).

3. Banc d'essai de véhicules, le banc d'essai de véhicules étant un banc d'essai à rouleaux,
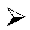 les rouleaux (102, 103, 106, 107, 108, 109) du banc d'essai à rouleaux étant chacun un composant d'une voie de roulement du banc d'essai de véhicules,
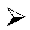 les voies de roulement étant conçues de telle sorte que le véhicule (101) à contrôler est supporté en appui lors de son déplacement le long de la voie de roulement,
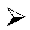 les rouleaux (102, 103, 106, 107, 108, 109) du banc d'essai à rouleaux étant associés par paires (102, 103 ; 106, 107 ; 108, 109) en tant que rouleaux doubles,
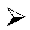 ces rouleaux associés par paires formant chacun un logement de roue (102, 103 ; 106, 107 ; 108, 109),
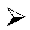 les rouleaux (102, 103 ; 106, 107 ; 108, 109) du banc d'essai à rouleaux associés par paires étant munis de moyens de liaison à longueur variable avec lesquels ces rouleaux (102, 103 ; 106, 107 ; 108, 109) associés par paires sont reliés ensemble par paires,
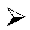 les moyens de liaison de longueur variable étant disposés uniquement entre les deux rouleaux (102, 103 ; 106, 107 ; 108, 109) associés par paires,
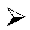 les rouleaux (102, 103 ; 106, 107 ; 108, 109) associés par paires pouvant être positionnés dans la direction longitudinale de la voie de roulement,
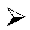 le positionnement pouvant être effectué en fonction de l'empattement ou de la position des essieux d'un véhicule (101) à contrôler,
et
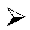 des éléments support (104, 105) étant présents,
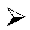 lesquels sont segmentés dans la direction longitudinale de la voie de roulement sous la forme d'éléments individuels (104, 105),
et
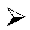 sont disposés devant et/ou derrière lesdites paires de rouleaux (102, 103 ; 106, 107 ; 108, 109) associés,
**caractérisé en ce que** des moyens de réglage sont présents au moyen desquels ces éléments support (104, 105) peuvent être déplacés latéralement hors de la voie de roulement et dans la voie de roulement pour positionner lesdits rouleaux (102, 103 ; 106, 107 ; 108, 109) associés par paires.

4. Banc d'essai de véhicules selon l'une des revendications 1 à 3, **caractérisé en ce que** des moyens d'entraînement (202, 203, 303, 304, 403, 404) des rouleaux (102, 103, 106, 107, 108, 109, 301, 401) sont montés (201) en dessous des rouleaux (102, 103, 106, 107, 108, 109, 301, 401).

5. Procédé pour réaliser un contrôle d'un véhicule dans un banc d'essai de véhicules selon l'une des revendications 2 à 4,
**caractérisé en ce que** les deux rouleaux (102, 103 ; 106, 107 ; 108, 109) du logement de roue sont réglés à une distance minimale entre les deux rouleaux (102, 103 ; 106, 107 ; 108, 109) pour une position de sortie du véhicule hors du banc d'essai de véhicules.

6. Procédé pour réaliser un contrôle d'un véhicule sur un banc d'essai de véhicules selon l'une des revendications 2 à 4,
**caractérisé en ce que** pour effectuer des opérations de contrôle sur un véhicule à contrôler, la distance entre les deux rouleaux (102, 103 ; 106, 107 ; 108, 109) d'un logement de roue est réglée en fonction d'un ou plusieurs des paramètres suivants :
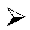 le diamètre de la roue du véhicule,
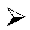 l'empattement du véhicule,
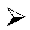 la charge maximale autorisée par essieu du véhicule sur l'essieu sur lequel est montée la roue placée dans le logement de roue.
